# EUROPEAN PATENT SPECIFICATION

(11) **EP 2 566 291 B1**
(45) Date of publication and mention of the grant of the patent: **27.06.2018**
(21) Application number: 11306097.4
(22) Date of filing: 05.09.2011
(51) Int. Cl.: H04W 88/08

(54) **Apparatus, Method, and Computer Program for a Remote Unit and a Central Unit**
Vorrichtung, Verfahren und Computerprogramm für eine Ferneinheit und eine Zentraleinheit
Appareil, procédé et programme informatique pour une unité distante et une unité centrale

(43) Date of publication of application: 06.03.2013
(73) Proprietor: Alcatel Lucent, 91620 Nozay (FR)
(72) Inventor: Doetsch, Uwe, 74392 Freudental (DE); Doll, Mark, 70469 Stuttgart (DE); Schaich, Frank, 70469 Stuttgart (DE)
(74) Representative: Menzietti, Domenico

(56) References cited:
- WO-A1-2010/019610
- WO-A1-2010/075864
- WO-A2-2008/092067
- US-A1- 2007 072 646

## Description

Embodiments of the present invention relate to mobile communications, more particularly to mobile communication networks using remote units and central units in base station transceivers.

### Background

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. The mobile communication infrastructure becomes more and more dense. The conventional base station transceiver in wireless communication systems like the Universal Mobile Telecommunication System (UMTS) and Long Term Evolution (LTE) system can be split in two separate units, a Remote Unit (RU), which is also referred to as Remote Radio Head (RRH), and a Central Unit (CU), connected either by electrical or optical links through a backhaul network. This concept is well known and can be found in the product lineup of infrastructure suppliers.

The RU comprises a Radio Frequency (RF) frontend, i.e. analog transmit and receive RF components. For the UpLink (UL) path the RU comprises a receive antenna, which can be reused as transmit antenna for the DownLink (DL) signals. Moreover, in the uplink path the RU comprises filters corresponding to the uplink bandwidth and frequency as well as a Low Noise Amplifier (LNA). In the downlink path, the respective downlink filters are comprised together with a Power Amplifier (PA) and a transmit antenna, which can be identical with the receive antenna of the uplink path.

Traditionally, time domain IQ samples are exchanged between RRH and baseband processing located at the CU, which requires about 50bit/s/Hz backhaul bandwidth. One approach to lower the backhaul bandwidth is only applicable to the downlink, where (scrambled) bits and control information that governs the remaining steps in the downlink processing chain to be executed by the RRH are transmitted. In other words, base band processing is carried out at the RRH. In case of Orthogonal Frequency Division Multiple Access (OFDMA) the steps are Forward Error Correction (FEC), Quadrature Amplitude Modulation (QAM), symbol mapping, layer mapping, precoding, power scaling, Orthogonal Frequency Division Multiplex (OFDM) symbol/subcarrier mapping, Inverse Fast Fourier Transform (IFFT), Cyclic Prefix (CP) insertion. For LTE, the required net backhaul bandwidth has been estimated to be about 5bit/s/Hz, i.e. about an order of magnitude less than traditional uncompressed time domain IQ. The drawback is that the RRH becomes complex and expensive, and in the uplink, there is no lossless equivalent, especially with Cooperative Multipoint transmission (CoMP) in mind, i.e. time domain IQ samples need to be sent at full bandwidth.

Document WO 2010 / 075864 A1 provides a method of arranging an exchange of signals between user terminals in a cellular communication system and at least one base station. The base station includes a central unit and a plurality of remote units. The signals are exchanged between the central unit and the remote units as aggregated signals for plural user terminals. The signals are processed at the remote units as distinct signals each associated to a respective one of the plural user terminals.

### Summary

The invention is defined in the appended claims. Embodiments are based on the finding that the number of required links, respectively the total required bandwidth scales linearly with the number of RRHs, cells, respectively, if the network backhaul is shared between a CU and multiple RRHs. It is a further finding that the backhaul data transfer may become prohibitively expensive with decreasing cell sizes and an accordingly increased number of RRHs.

For example, at an inter-site distance of 500m, there are almost 1100 sites within a circular area of 10km radius, yielding approximately 20km fiber length to a central baseband including a factor of 2 for detour due to fibers following the streets, etc. With Coarse Wavelength Division Multiplexing (CWDM) up to 18 wavelengths per fiber are possible depending on fiber type, so at least 60 dedicated fibers are required at the centralized baseband cloud/cluster. Dense Wavelength Division Multiplexing (DWDM) allows up to about 160 wavelengths per fiber, but transceivers are (much) more expensive. Embodiments are based on the finding that instead of a dedicated wavelength per site, a packet switched network can be more cost effective, when the rate between a CU and a RU varies over time. Assuming that these 1100 sites are not always fully loaded at the same time, e.g. within a few milliseconds to seconds, embodiments may reduce the required bandwidth for such a packet switched network, especially on links near the CU.

According to a further finding, the transport of a time domain signal is baseband technology agnostic, e.g. embodiments can be equally applicable to Code Division Multiple Access (CDMA), OFDMA and other access technologies. In other words, if the processing at the RRH is limited to the conversion of a transmission band signal to a base band signal, without any further baseband processing, then the RRH can be made baseband technology agnostic.

It is a further finding for small cells that deployment of self-contained cells, i.e. the baseband is integrated in the RRH, may reduce the required backhaul bandwidth to the actual amount of user data in the RRH's cell, but has a drawback compared to a centralized baseband that additional backhaul bandwidth is required to implement CoMP, which may become as high as for time domain IQ samples in case of coherent uplink joint reception. In CoMP signals from multiple cells or RRH are combined in order to achieve diversity gain through selection combining, maximum ratio combining, soft combining, etc. The concept is similar to what is known as soft or softer handover. However, if a mobile transceiver is associated to a single cell only, then it communicates only with that cell. If the base band processing is carried out at the remote unit (RRH) then it is not possible to combine the receive signals from multiple cells at the central unit. Furthermore, it is also not possible to receive and combine signals from multiple cells at the mobile transceiver, since it would have to be associated to each of these multiple cells. With the base band processing at the remote unit, individual processing of the dedicated control data for each mobile transceiver would have to be carried out at the independent remote units, rendering coordinated transmission almost impossible.

Embodiments can be based on a further finding, that a lossy compression scheme can be used for the signals forwarded from the RRH to the CU, which includes down-sampling and block scaling and achieves a compression by factor 3.5, i.e. to about 15bit/s/Hz, but since this concept is lossy, its impact on cooperative multipoint transmission and reception (CoMP) is an open issue. Furthermore, such a concept would still lead to a constant rate, i.e. no load depending multiplexing gain can be achieved, and therefore it is best suited for connection of each RRH via a dedicated link (e.g. fiber, wave length).

It is a further finding that a bandwidth efficient scheme only for DL without a counterpart for the UL hardly reduces backhaul link bandwidth, since backhaul link bandwidth needs to be dimensioned according to the maximum of both DL and UL demand, assuming symmetrical link bandwidth. For asymmetric bandwidth, where typically UL direction has a lower bandwidth than DL, a reduction in DL is of limited use, too.

Embodiments provide an apparatus for a remote unit of a base station transceiver in a mobile communication system, i.e. embodiments may provide said apparatus to be operated by or included in a remote unit. In the following, the apparatus will also be referred to as remote unit apparatus. The mobile communication system may, for example, correspond to one of the mobile communication systems standardized by the 3rd Generation Partnership Project (3GPP), as Universal Terrestrial Radio Access Network (UTRAN) or Evolved UTRAN (E-UTRAN), e.g. Universal Mobile Telecommunication System (UMTS), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Code Division Multiple Access (CDMA), Orthogonal Frequency Division Multiple Access (OFDMA) or any other future technology with a multiplexing capable physical layer like Filter Bank Based Multicarrier (FBMC) systems. In the following the terms mobile communication system and mobile communication network are used synonymously.

The base station transceiver comprises a central unit and the remote unit. The remote unit and the central unit can be located at different geographical locations. In other words, the base station transceiver is assumed to comprise or to be composed of a central unit and the remote unit. The central unit and the remote unit can be separated and can be interconnected, for example, by fiber optics or any wired link. In other embodiments the remote unit and the central unit can also be interconnected using a wireless link, e.g. a high data rate radio connection.

The remote unit apparatus comprises first means for communicating with a plurality of mobile transceivers associated to the remote unit using multiplexed radio signals. The first means for communicating may correspond to an air interface in line with any of the above mobile communication systems. In embodiments the remote unit may operate one or more cells, i.e. provide radio signals to the mobile transceivers, which establish one or more cells. The term cell refers to a coverage area of radio services provided by a base station transceiver through the remote unit. A base station transceiver and/or a remote unit may operate multiple cells, in some embodiments a cell may correspond to a sector. For example, sectors can be achieved using sector antennas, which provide a characteristic for covering an angular section around a remote unit. In some embodiments, a remote unit may, for example, operate three or six cells covering sectors of 120° (in case of three cells), 60° (in case of six cells) respectively. A mobile transceiver can be registered with a cell, i.e. it can be associated to a cell such that data can be exchanged between the network and the mobile in the coverage area of the associated cell. A cell is thus operated by a base station transceiver though a remote unit and can be seen as a coverage area, which can be identified through reference or broadcast channels with a respective identification, as, for example, the Common PIlot CHannel (CPICH) in UMTS.

The first means for communicating can be adapted to receive uplink signals from mobile transceivers in the coverage area of the remote unit and to transmit downlink signals to mobile transceivers in its coverage area. In other words, an uplink receive signal is referred to as a signal received at one or more receive antennas of the remote unit and which can be further processed, as, for example, by means of one or more filters, a mixer, a low noise amplifier (LNA) etc.

The remote unit apparatus further comprises second means for communicating with the central unit of the base station transceiver. The second means for communicating is adapted to receive information on an uplink demultiplexing instruction from the central unit and/or to receive information on a downlink multiplexing instruction and downlink signal components from the central unit. In other words, the second means for communicating may correspond to a second interface of the remote unit apparatus, which can for example be implemented as an optical link using optical fibers. In other embodiments an electrical connection can be used as well. In some embodiments the second means for communicating may use a wired connection, in other embodiments it may use a wireless connection. Furthermore, the second means for communicating is adapted to receive instructional information from the central unit. The instructional information may refer to a demultiplexing operation of an uplink receive signal, i.e. information on how the uplink receive signal shall be demultiplexed and/or information on which and how the demultiplexed parts or components shall be forwarded to the central unit. The second means for communicating is adapted to forward or send multiplexed uplink signal parts or uplink signal components to the central unit.

Therewith, the central unit has control over the signal forwarded from the remote unit apparatus to the central unit and thus over the bandwidth used on the link in between. In a similar way, the central unit may provide instructional information on a multiplexing operation for downlink transmission together with the corresponding downlink signal components to the remote unit apparatus. As the multiplexing is done in the remote unit apparatus, recurring data can be stored and included in the multiplexing operation in line with the instructional information from the central unit. Therewith, the central unit also has control on the bandwidth used on the link between the central unit and the remote unit apparatus for downlink transmission.

Thus, the remote unit apparatus further comprises means for processing the signals of the mobile transceivers associated to the remote unit. The means for processing the signals of the mobile transceivers is adapted to process the uplink receive signal based on the information on the uplink demultiplexing instruction to obtain demultiplexed uplink signal components and/or the means for processing the signals of the mobile transceivers is adapted to process the downlink signal components based on the information on the downlink multiplexing instruction to obtain a multiplexed downlink data signal. Furthermore, the first means for communicating is adapted to communicate the multiplexed downlink data signal to the plurality of mobile transceivers associated to the remote unit and/or the second means for communicating is adapted to communicate the demultiplexed uplink signal components to the central unit. The second means for communicating is adapted to receive the downlink signal components, which are to be multiplexed as well as the information on the downlink multiplexing instruction from the central unit, the information on the uplink demultiplexing instruction respectively.

Embodiments further provide an apparatus for a central unit of a base station transceiver of a mobile communication system, i.e. embodiments may provide said apparatus to be operated by or included in a central unit. In the following, the apparatus will also be referred to as central unit apparatus. In line with the above, the base station transceiver comprises the central unit and a remote unit,. The central unit apparatus comprises means for generating information on an uplink demultiplexing instruction and/or information on a downlink multiplexing instruction for the remote unit of the base station transceiver. In other words, the means for generating is adapted to generate the above described instructional information for the remote unit. Correspondingly, the central unit apparatus comprises means for exchanging information with the remote unit of the base station transceiver. The means for exchanging is adapted to transmit the information on the uplink demultiplexing instruction to the remote unit and to receive demultiplexed data from the remote unit. Additionally or alternatively, the means for exchanging is adapted to transmit the information on the downlink multiplexing instruction and downlink signal components to the remote unit of the base station transceiver.

Embodiments may therewith enable a load dependent multiplexing gain in the required backhaul bandwidth, i.e. the bandwidth to be provided for the second means for communicating of the remote unit apparatus and the means for exchanging of the central unit apparatus, between RRHs and a centralized baseband at the central unit, if multiple RRHs or remote units can at least partially share the same backhaul, and if the backhaul technology can realize a multiplexing gain on the shared part, e.g. is packet switched and not circuit-switched. The RRHs can extract parts or components from a received uplink radio signal, e.g. those parts or components containing uplink transmissions from desired mobile stations or on desired radio resources and send only those parts or components to the centralized baseband at the central unit.

In other words, the means for processing is adapted to process an uplink receive signal based on the information on the uplink demultiplexing instruction to obtain demultiplexed uplink data, signal components, or signal parts, wherein the uplink receive signal has a higher bandwidth than the sum of the bandwidths of the demultiplexed uplink signals, which are communicated to the central unit based on the information on the uplink demultiplexing instruction. That is to say, the amount of data or the data volume transferred from the remote unit to the central unit is less than the maximum amount of data or the maximum data volume that could be transferred between the remote unit and the mobile transceivers. In other words, in a scenario where the load of the remote unit on the first means for communicating, i.e. the air interface, is below maximum, the central unit apparatus can instruct the remote unit apparatus to forward only parts or components of the uplink receive signal, which correspond to the actual load, i.e. which use up less bandwidth or transmission resources on the link between the remote unit and the central unit than an uplink receive signal in a fully loaded scenario. The means for processing may for example convert the uplink receive signal, which was filtered and amplified by an LNA, from the transmission band to the base band. The demultiplexing may then be carried out on the down-converted signal, e.g. in terms of subcarrier de-mapping in OFDM, code-sequence demultiplexing in CDMA, etc. Thus the uplink signal component or the uplink signal parts can correspond to the signals of a subcarrier in an OFDM or OFDMA system, to the signals of a code-sequence in CDMA, the signals of a time slot, etc. The means for processing may then select the signals of certain radio resources for demultiplexing, e.g. a set of subcarriers, a set of code sequences, a set of time slots etc.

In other words, the means for generating at the central unit apparatus can be adapted to generate information on the uplink demultiplexing instruction and the information on the uplink demultiplexing instruction may comprise information on a desired set of radio resources for which the demultiplexed data is then received at the central unit apparatus. At the remote unit apparatus, the means for processing can be adapted to extract from the uplink receive signal uplink transmissions from the desired set of radio resources to obtain the demultiplexed uplink signal components, information on the desired set of radio resources being comprised in the information on the uplink demultiplexing instruction. Furthermore, embodiments may enable RRHs to synthesize a downlink radio signal from a number of signal parts received from the centralized baseband at the central unit. In embodiments, the information on the uplink demultiplexing instruction or the information on the downlink multiplexing instruction may comprise information on a signal form, e.g. an OFDM signal form and/or how it is composed/decomposed based on signal parts, e.g. OFDMA signal parts. The OFDM signal form may correspond to the uplink receive signal and/or the multiplexed downlink data signal, and the OFDMA signal parts may correspond to the downlink signal components and/or demultiplexed uplink signal components.

Embodiments may realize a load dependent lossless signal compression through exchanging only relevant radio signal parts between RRHs and centralized baseband. In an embodiment, the efficient resource utilization on the backhaul between the remote unit and the central unit can be augmented by coding the relevant radio signal parts in a size efficient way using a state in the RRHs that is maintained by the centralized baseband at the central unit. Embodiments may only send non-predictable downlink radio signal components explicitly from centralized baseband to RRHs, while recurring downlink signal parts or components are replayed by the RRHs on request or autonomously.

In some embodiments, the information on the uplink demultiplexing instruction or the information on the downlink multiplexing instruction comprises templates specifying coding information for encoding the uplink receive signal and/or for decoding the multiplexed downlink data signal. The means for processing can be further adapted to store the template such that the template can be referenced by the information on the uplink demultiplexing instruction or the information on the downlink multiplexing instruction. In other words, the information on the uplink demultiplexing instruction or the information on the downlink multiplexing instruction can comprise a description of the basic (e.g. OFDM) signal form and its breakdown into multiplexed (e.g. OFDMA) signal parts or signal components, and templates, specifying the coding of each signal part according to that description. The templates can be stored within the RRH or remote unit apparatus and maintained by the centralized baseband or central unit apparatus. The central unit apparatus can then instruct the remote unit apparatus to extract a certain radio signal part by referencing the corresponding template. Furthermore, the remote unit apparatus, i.e. the means for processing may code a radio signal part based on a reference to one of these templates received from the central unit apparatus and code the contained signal according to that template. The remote unit apparatus and the central unit apparatus may exchange radio-signal parts or components in coded form.

Moreover, embodiments may take advantage of recurring radio-signal parts. The means for processing can be adapted to process the downlink data based on the information on the downlink multiplexing instruction to obtain a multiplexed downlink data signal, wherein the downlink data corresponds to dedicated user data and control information. The control information or the instructional data may comprise information on the generation of recurring data to be multiplexed with the downlink data or downlink signal components. In the central unit apparatus the means for generating can be adapted to generate the according control information or instructional data. On the side of the remote unit apparatus the means for processing can be further adapted to generate recurring downlink data or downlink signal components for multiplexing the multiplexed downlink data signal. The means for processing can be adapted to generate the recurring downlink signal components based on stored data signals, based on the information on the downlink multiplexing instruction, based on stored playback information and/or based on predefined playback information.

In other words, radio signal parts or components can be stored within the RRH or remote unit apparatus and maintained by the centralized baseband or central unit apparatus. The RRH may transmit a stored radio signal component on request and as instructed therein by the centralized baseband. In some embodiments playback programs, being stored within the RRH and maintained by the centralized baseband, describing transmission of stored radio signal parts may be used to generate recurring signals or signal components. In embodiments, the RRH or remote unit apparatus may autonomously transmit radio signal parts according to the stored playback programs.

Embodiments may further provide a base station transceiver comprising an embodiment of the remote unit apparatus and/or an embodiment of the central unit apparatus. Embodiments may also provide a mobile communication system with said base station transceiver.

Embodiments may further provide a method for a remote unit of a base station transceiver in a mobile communication system. The base station transceiver comprises a central unit and the remote unit.. The method comprises a step of communicating with a plurality of mobile transceivers associated to the remote unit using multiplexed radio signals and receiving an uplink receive signal. The method further comprises a step of communicating with the central unit of the base station transceiver. The communicating comprises receiving information on an uplink demultiplexing instruction from the central unit and/or receiving information a downlink multiplexing instruction and downlink signal components from the central unit. The method further comprises a step of processing the uplink receive signal based on the information on the uplink demultiplexing instruction to obtain demultiplexed uplink signal components, and/or processing the downlink signal components based on the information on the downlink multiplexing instruction to obtain a multiplexed downlink data signal. The method further comprises communicating the multiplexed downlink data signal to the plurality of mobile transceivers associated to the remote unit and/or communicating the demultiplexed uplink signal components to the central unit.

Embodiments further provide a method for a central unit of a base station transceiver in a mobile communication system. The base station transceiver comprises the central unit and a remote unit. The method comprises a step of generating information on an uplink demultiplexing instruction and/or information on a downlink multiplexing instruction for the remote unit of the base station transceiver. The method further comprises exchanging information with the remote unit of the base station transceiver, which comprises transmitting the information on the uplink demultiplexing instruction to the remote unit and receiving demultiplexed uplink signal components from the remote unit and/or transmitting the information on the downlink multiplexing instruction and downlink signal components to the remote unit of the base station transceiver.

Embodiments further provide a computer program having a program code for performing one of the above described methods, when the computer program is executed on a computer or processor.

### Brief description of the Figures

Some other features or aspects will be described using the following non-limiting embodiments of apparatuses and/or methods and/or computer programs by way of example only, and with reference to the accompanying figures, in which
Figure 1 shows an embodiment of a base station transceiver, which comprises an embodiment of a remote unit apparatus and an embodiment of a central unit apparatus;
Figure 2 depicts an embodiment for OFDMA; and
Figure 3 depicts an embodiment for PRACH;
Figure 4 shows a block diagram of an embodiment of a method for a remote unit; and
Figure 5 shows a block diagram of an embodiment of a method for a central unit.

### Description of some Embodiments

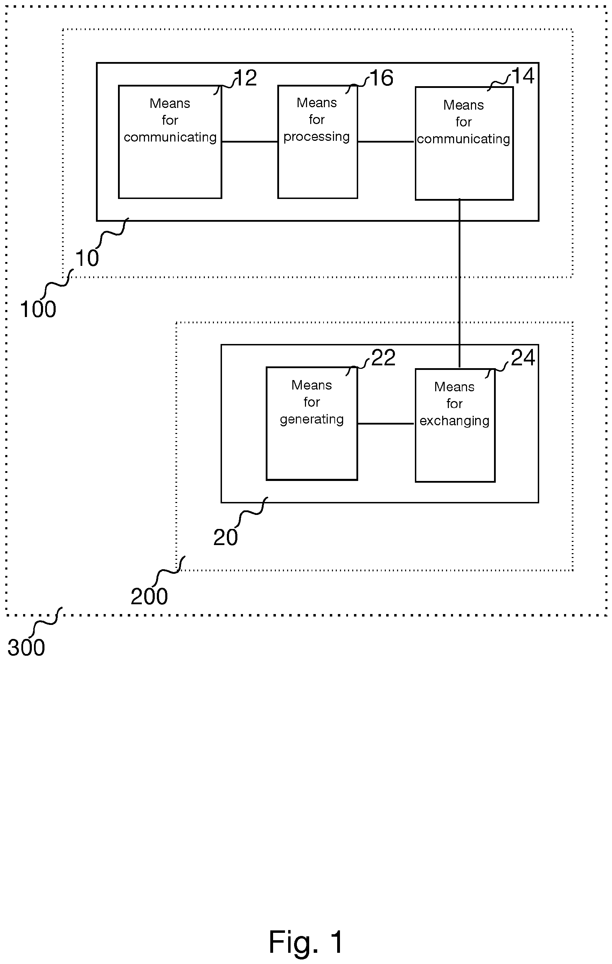

Figure 1 shows an embodiment of a base station transceiver 300, which comprises a remote unit 100 with an embodiment of a remote unit apparatus 10 and a central unit 200 with an embodiment of a central unit apparatus 20. It is to be noted that in further embodiments the central unit 200 can be connected to multiple remote units 100 using the same link, as e.g. an optical fiber. The following embodiments will describe how the load on the link between the remote unit apparatus 10 and the central unit apparatus 20 can be controlled and packet switched transmission can be enabled.

The remote unit 100 and the central unit 200 can be located at different geographical locations and they can be interconnected by a wired or a wireless link. In line with Figure 1 the remote unit apparatus 10 comprises first means for communicating 12 with a plurality of mobile transceivers associated to the remote unit 100 using multiplexed radio signals, wherein the first means for communicating 12 is adapted to receive an uplink receive signal. Moreover, the remote unit apparatus 10 comprises second means for communicating 14 with the central unit 200 of the base station transceiver 300. The second means for communicating 14 is adapted to receive information on an uplink demultiplexing instruction from the central unit 200 and/or to receive information on a downlink multiplexing instruction and downlink signal components from the central unit 200. The second means for communicating 14 is also adapted to communicate the demultiplexed uplink signal components to the central unit 200. The remote unit apparatus 10 further comprises means for processing 16 the signals of the mobile transceivers associated to the remote unit 100. The means for processing 16 the signals of the mobile transceivers is adapted to process the uplink receive signal based on the information on the uplink demultiplexing instruction to obtain demultiplexed uplink signal components and/or the means for processing 16 the signals of the mobile transceivers is adapted to process the downlink signal components based on the information on the downlink multiplexing instruction to obtain a multiplexed downlink data signal. The first means for communicating 12 is adapted communicate the multiplexed downlink and uplink signals to the plurality of mobile transceivers associated to the remote unit 100.

Figure 1 also illustrates an embodiment of an apparatus 20 for the central unit 200 of the base station transceiver 300 in the mobile communication system. The central unit apparatus 20 comprises means for generating 22 information on an uplink demultiplexing instruction and/or information on a downlink multiplexing instruction for the remote unit of the base station transceiver. Furthermore, the central unit apparatus 20 comprises means for exchanging 24 information with the remote unit of the base station transceiver. The means for exchanging 24 is adapted to transmit the information on the uplink demultiplexing instruction to the remote unit 100 and to receive demultiplexed uplink signal components from the remote unit 100 and/or the means for exchanging is adapted to transmit the information on the downlink multiplexing instruction and downlink signal components to the remote unit 100 of the base station transceiver 300.

In the following an embodiment of an OFDMA system will be described. Throughout the embodiment, LTE is used as an example, but the implementation is considered generic enough to be applicable to different OFDMA baseband technologies like LTE, WiMAX or WLAN. Although the embodiment solely targets OFDMA systems, an analogous approach is feasible to CDMA, too.

In OFDMA, multiplexing happens on the basis of individual subcarriers of individual OFDM symbols, i.e. multiplexing gain can be realized if frequency domain IQ samples are exchanged between the remote unit apparatus 10 (RRH) and the central unit apparatus 20 (centralized baseband). In this embodiment the Inverse Fast Fourier Transform (IFFT) for downlink transmission and the FFT for uplink transmission is carried out in the remote unit apparatus 10. In embodiments parts of the processing chain can be moved from the centralized baseband (CU) into the RRHs (RUs).

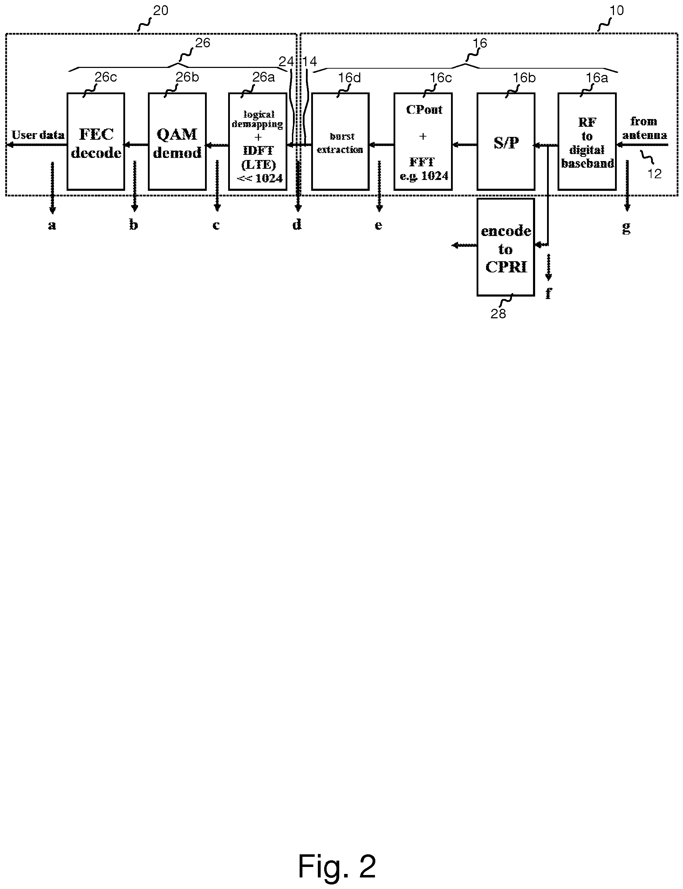

Figure 2 illustrates the processing chain in the uplink of an OFDMA system. The remote unit apparatus 10 and the central unit apparatus 20 are illustrated by the broken line boxes. On the very right a signal, i.e. the uplink receive signal, is received through the first means of communicating 12, e.g. being implemented as a receive antenna, one or more filters and an LNA. The arrow g symbolizes an approach, which is also referred to as radio over fiber, where the received radio signal is converted to an optical signal and transmitted to the central unit 200. In Figure 2 the means for processing 16 subdivided in four processing blocks 16a, 16b, 16c and 16d. In block 16a the signal is converted from the transmission band to the digital base band, i.e. the signal is down-mixed from the Radio Frequency (RF) to the base band frequency and digitized (analog/digital converted). The digitized base band signal is also symbolized by arrow f and block 28 represents an approach, where the digitized base band signal is forwarded in form of time domain IQ samples to the central unit 200 using the Common Public Radio Interface (CPRI).

In block 16b digitized base band signal is serial-parallel converted before subsequently in block 16c, the cyclic prefix (CP) is removed and the signal is transformed into the frequency domain using an FFT, e.g. of size 1024. The arrow e symbolizes the frequency domain samples and the possibility to transport the received frequency domain symbols, i.e. the output of FFT encoded via "frequency domain CPRI", to the central unit. It is to be noted that up to this point in the processing chain no multiplexing gain/rate reduction in case of an underloaded cell is possible, as all signals still correspond to the full bandwidth or data rate of the cell.

Block 16d illustrates the burst extraction or demultiplexing of user signals from the frequency domain samples based on the information on the uplink demultiplexing instruction from the central unit apparatus 20 to obtain the demultiplexed uplink signals or uplink signal components. In other words, users or signals of the mobile transceivers are demultiplexed, where users or mobile transceivers sharing the same subcarrier are still superimposed, which therefore still supports CoMP. The means for processing 16 is adapted to process the uplink receive signal based on the information on the uplink demultiplexing instruction to obtain demultiplexed uplink signal components, wherein the uplink receive signal has a higher bandwidth than the sum of the bandwidths of the demultiplexed uplink signal components, which are actually communicated to the central unit 200. The central unit apparatus 20 may include information on the desired set of radio resources being comprised in the information on the uplink demultiplexing instruction, in the present embodiment, the set of desired radio resources corresponds to a set of subcarriers in one or a set of OFDM symbols. In other embodiments, e.g. embodiments in CDMA, the set of desired radio resources may correspond to a subset of code sequences, a set of time slots, etc.

Generally, in embodiments the information on the uplink demultiplexing instruction and/or the information on the downlink multiplexing instruction can comprise information on an OFDM signal form and/or how it is composed/decomposed based on OFDMA signal parts, wherein the OFDM signal form corresponds to the uplink receive signal and/or the multiplexed downlink data signal, and wherein the OFDMA signal parts correspond to the downlink signal components and/or demultiplexed uplink signal components.

In other words and as indicated in Figure 2, binary representations of noisy QAM symbols are then communicated from the remote unit apparatus 10 through the second means for communicating 14 to the central unit apparatus 20, which is also symbolized by arrow d. Multiplexing gain or rate reduction in case of an under-loaded cell can be achieved through omitting unused symbols, i.e. without scheduled users. Samples of unused subcarriers may not be communicated, i.e. they may not be part of the set of desired radio resources. In some embodiments, lossy block scaling compression may still be applied. Such an implementation would be straight forward within the framework of the embodiment as each signal part forms a block that can be easily scaled/compressed individually.

In the embodiment depicted in Figure 2, demultiplexed uplink signals or signal components are then communicated through the second means for communicating 14 from the remote unit apparatus 10 to the central unit apparatus 20. The central unit apparatus 20 receives the demultiplexed uplink signal components or signals through the means for exchanging 24. In embodiments, generally, the central unit apparatus 20 may further comprise means for processing 26, which is subdivided into three blocks 26a, 26b and 26c in Figure 2. In block 26a a logical de-mapping is carried out in addition to another, smaller sized, IDFT to undo the sender-side DFT, which is used in LTE as pre-filter measure for reduction of the peak-to-average-power-ratio of the time domain OFDM signal. The arrow c symbolizes an approach, in which binary representations of soft-bits could be transported if block 26a was still part of the remote unit apparatus 10. Subsequently, QAM demodulation is carried out in block 26b, where the arrow b symbolizes transportation of equalized QAM symbols, when block 26a and 26b would still belong to the remote unit apparatus 10. After FEC decoding in block 26c, the user data is available and arrow a symbolizes an approach, where fully decoded user data (hard-bits) could be transported, when block 26a to 26c would still belong to the remote unit apparatus 10, for example using the Internet Protocol (IP).

In embodiments, the central unit apparatus 20 may maintain a certain state in the remote unit apparatus 10 using the according instructional information. In the present embodiment, the centralized baseband or central unit apparatus 20 describes the basic OFDM signal form to the RRH (remote unit apparatus 10), e.g. sampling frequency, FFT size, CP length and the samples to copy into it (if any). There can be different sets of these basic parameters, e.g. for the Random Access CHannel (RACH) and differently sized component carriers. Then, per each such basic signal form, one or more coordinate systems for the time (e.g. OFDM symbol) and frequency (e.g. subcarrier) resource grid can be established and be part of the information on the uplink demultiplexing instruction and/or the information on the downlink multiplexing instruction.

In embodiments, within these coordinate systems, templates can specify the individual multiplexed signal parts or components each template consists of. For example, a template may specify the coordinate system and thereby the basic signal form that this template applies to. The template may specify grid points belonging to the signal component and/or the order in which data is to be mapped (DL) respectively extracted (UL) onto/from the grid points. Templates may comprise additional data that may be expected, e.g. a complex-valued scaling factor to be applied during mapping/extraction, a coding identifier to be able to dynamically choose between different codings for the data. In embodiments a template may comprise the coding of the data including any additional data, i.e. type (real or complex-valued), resolution (in bit), format (signed or not, fixed or floating point, bit order etc.), and/or a unique identifier of this template.

For example, the templates may refer to or be per Physical Resource Block (PRB) pair, per Control Channel Element (CCE) or per all Cell-specific Reference Symbols (CRS) of one antenna port. A PRB pair template may specify 16 bit complex-valued data, or 6 bit complex-valued data and 16 bit real-valued scaling factor to implement the lossy block scaling compression as mentioned above, while a CRS template may specify 1 bit real-valued data and a scaling factor to power boost and to phase rotate into the Binary Phase Shift Keying (BPSK) constellation as required.

In embodiments, the means for processing 16, which may synthesize and/or extract the radio signals or uplink signal components according to the basic parameters and templates as part of the information on the uplink demultiplexing instruction and/or the information on the downlink multiplexing instruction, can be part of the software executed in the RRH, i.e. the remote unit apparatus 10. The means for generating 22 allows the centralized baseband 20 to set up basic parameters and templates as well as to store signal parts or components and playback programs. The software may determine the class of baseband like OFDMA that the RRH is capable of. The basic parameters and templates determine the actual baseband technology like LTE or WiMAX and/or specific feature sets thereof that the RRH should operate. The programming with parameters and templates is expected to happen seldom and might even be executed autonomously by the RRH during power-on through executing corresponding startup code.

The centralized base band, i.e. the central unit apparatus 20, instructs the remote unit apparatus 10 at the RRH, which radio signal components to extract from the received uplink signal, by sending the corresponding template identifiers with one or more timestamps, e.g. frame and subframe number, when to apply these templates. For the downlink, the remote unit apparatus 10 may synthesize a full baseband signal through the means of processing 16, assuming zero power on each grid point, where it has not received a signal component for from the centralized baseband (in the downlink multiplexing instruction). The means for processing 16 is adapted to process the downlink signal components based on the information on the downlink multiplexing instruction to obtain the multiplexed downlink data signal. The downlink signal components can correspond to dedicated user data and dedicated control information. The means for processing 16 is adapted to generate recurring downlink data or downlink signal components for multiplexing the multiplexed downlink data signal. When the remote unit apparatus 10 (RRH) and the central unit apparatus 20 (centralized baseband) exchange radio signal parts or components, only the unique template identifier plus the very data including any additional data is exchanged, thereby realizing an additional compression besides omitting any irrelevant/empty signal parts.

For recurring signal parts or components like preambles or reference symbols, the central unit apparatus 20 as centralized baseband sends the respective signal parts or components, i.e. its unique template identifier plus data and possibly one or more playback programs, each signal component and program accompanied by a unique identifier, to the remote unit apparatus 10 (RRH), which saves them for later use. The means for processing 16 is adapted to generate the recurring downlink data based on stored data signals, based on the information on the downlink multiplexing instruction and/or stored playback information. The RRH or remote unit apparatus 10 then plays back saved radio signal parts or components, either on explicit request by the centralized baseband, i.e. when it receives their unique signal component identifiers and one or more timestamps, or autonomously according to a playback program, that has been activated by the centralized baseband. On the side of the central unit apparatus 20 the means for generating 22 is adapted for generating information on the downlink multiplexing instruction for the remote unit 100 and the information on the downlink multiplexing instruction and the downlink signal components correspond to control information and dedicated user data. The control information or the instructional information may comprise information on generation of recurring data or signal components to be multiplexed with the downlink data.

The possible backhaul bandwidth saving through autonomous playback of recurring signals can be relatively small, when recurring signals only form a small part of the full radio signal, but even in such embodiments, the playback adds extra robustness against short-period communication failures between centralized baseband 20 and RRHs 10, e.g. sporadic packet losses, in that the RRHs are at least able to maintain a downlink signal of an unloaded cell.

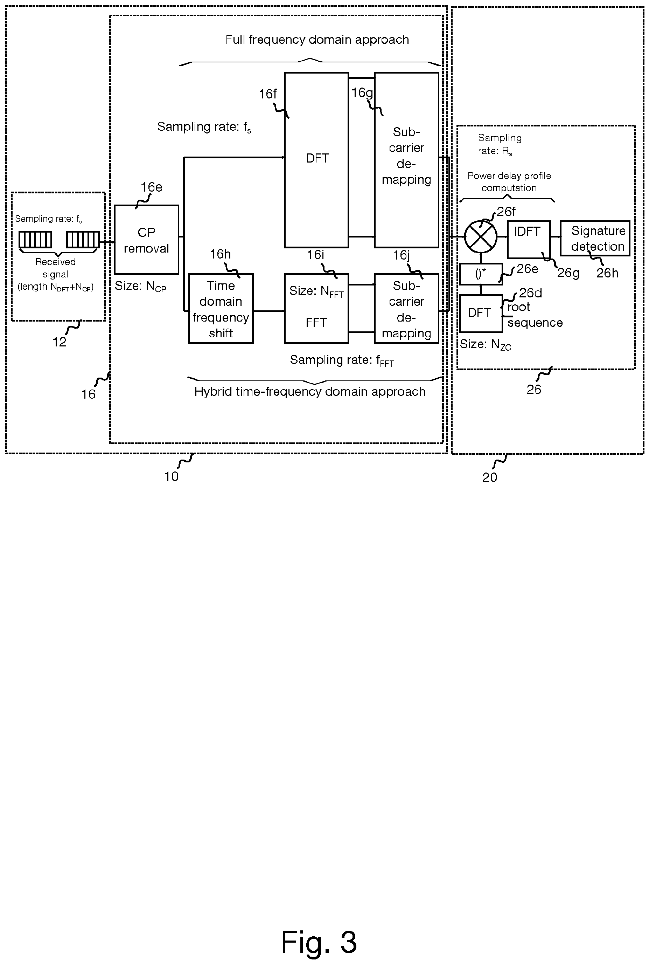

Figure 3 depicts an embodiment for the Physical RACH channel as an embodiment for LTE. The processing chain will be described from left to right, where two different processing alternatives are to be explained. The first one is a full frequency domain approach and depicted in the upper processing branch in Figure 3. The second approach is a hybrid time-frequency domain approach depicted in the lower processing branch in Figure 3. Figure 3 shows an embodiment of the remote unit apparatus 10 on the left hand side and an embodiment of the central unit apparatus 20 on the right hand side.

On the very left an uplink PRACH signal is received through the first means for communicating 12. It is assumed that the receive signal has a sampling rate of *fₛ* and length of *N_{DFT}*+*N_{CP}* samples, where *N_{DFT}* is the number of subcarriers in the OFDM symbol and the size of the subsequent Fourier transform, *N_{CP}* corresponds to the length of the cyclic prefix. In the embodiment depicted in Figure 3, the means for processing 16 has two alternative processing branches. First, in block 16e the cyclic prefix is removed such that the receive signal has a reduced length of N_{DFT} samples. In the upper branch, i.e. according to the full frequency domain approach, the signal is then transformed into the frequency domain in block 16f using a Discrete Fourier Transform (DFT). The subcarrier de-mapping or demultiplexing is then carried out in block 16g.

Alternatively, a time domain frequency shift may be carried out in block 16h according to the hybrid time-frequency domain approach in the lower branch. After the frequency shift, the signal can be transformed using the Fast Fourier Transform (FFT) in block 16i before subcarrier de-mapping in block 16j.

In line with both alternatives, after the subcarrier de-mapping the relevant signal can be selected based on the information on the uplink demultiplexing instruction from the central unit apparatus 20 and forwarded to the central unit apparatus 20 through the second means for communicating 14, which is not shown in Figure 3 for clearness reasons.

The central unit apparatus 20 then receives the desired uplink signals or components, for which a sampling rate of Rₛ is assumed, through the means for exchanging 24, which is also not shown in Figure 3 for clearness reasons. The means for processing 26 in the central unit 20 comprises a root sequence generator which generates a root sequence, e.g. a Zadoff-Chu sequence of length N_{ZC}, which is then transformed to the frequency domain using a DFT in block 26d. The frequency domain signal is complex-conjugated in block 26e before it is multiplied with the signal received from the remote unit apparatus 10 in block 26f. Subsequently the product of these signals is transformed to the time domain using the IDFT in block 26g before the PRACH signature can be detected in block 26h. Blocks 26d, 26e, 26f, and 26g correspond to the computation of the power delay profile, by correlating the signal received from the remote unit apparatus 10 with the root sequence.

In other words, the PRACH processing can be done at the remote unit apparatus 10 up to the subcarrier de-mapping. A binary representation of the PRACH frequency domain symbols can then be transmitted to the central unit apparatus 20. The separate FFT/DFT for PRACH in the two branches of the means for processing 16, i.e. different basic OFDM signal form descriptions for PRACH, can be loaded into the remote unit apparatus 10 (RRH) by the centralized baseband 20. The PRACH computations can then be carried out at the central entity (periodic correlations, measurements, etc.).

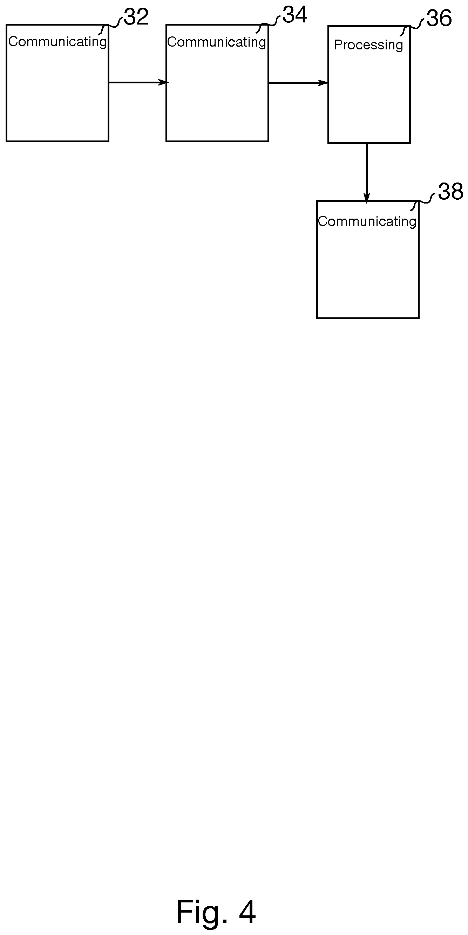

Figure 4 shows a block diagram of an embodiment of a method for a remote unit 100 of a base station transceiver 300 in a mobile communication system. The base station transceiver 300 comprises a central unit 200 and the remote unit 100. The method comprises a step of communicating 32 with a plurality of mobile transceivers associated to the remote unit 100 using multiplexed radio signals and receiving an uplink receive signal.

The method comprises a further step of communicating 34 with the central unit 200 of the base station transceiver 300, where the step of communicating comprises receiving information on an uplink demultiplexing instruction from the central unit 200 and/or receiving information a downlink multiplexing instruction and downlink signal components from the central unit 200. The method comprises a further step of processing 36 the signals of the mobile transceivers associated to the remote unit 100 based on the information on the uplink demultiplexing instruction to obtain demultiplexed uplink signal components, and/or processing 36 the downlink signal components based on the information on the downlink multiplexing instruction to obtain a multiplexed downlink data signal. The method comprises a further step of communicating 38 the multiplexed downlink data signal to the plurality of mobile transceivers associated to the remote unit 100 and/or communicating the demultiplexed uplink signal components to the central unit 200.

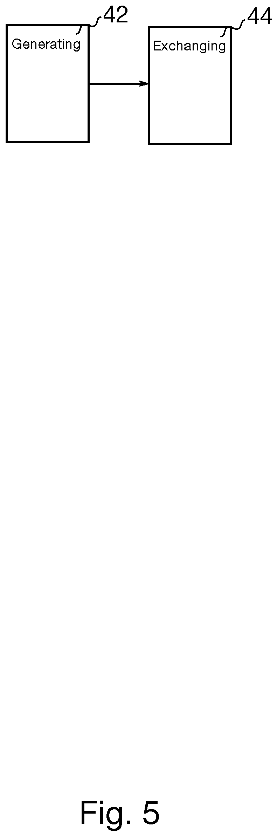

Figure 5 shows a block diagram of an embodiment of a method for a central unit 200 of a base station transceiver 300 in a mobile communication system. The base station transceiver 300 comprises the central unit 200 and a remote unit 100. The method comprises a step of generating 42 information on an uplink demultiplexing instruction and/or generating information on a downlink multiplexing instruction for the remote unit 100 of the base station transceiver 300. The method further comprises a step of exchanging 44 information with the remote unit 100 of the base station transceiver 300, which comprises transmitting the information on the uplink demultiplexing instruction to the remote unit 100 and receiving demultiplexed uplink signal components from the remote unit 100 and/or transmitting the information on the downlink multiplexing instruction and downlink signal components to the remote unit 100 of the base station transceiver 300.

Embodiments may further provide a computer program having a program code for performing one of the above methods, when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope, which is defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for communicating", "means for processing", "means for generating", "means for exchanging", etc., may be provided through the use of dedicated hardware, such as "a communicator", "a processor", "an exchanger", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for a remote unit (100) of a base station transceiver (300) in a mobile communication system, the base station transceiver (300) comprising a central unit (200) and the remote unit (100), the remote unit apparatus (10) comprising
first means for communicating (12) with a plurality of mobile transceivers associated to the remote unit (100) using multiplexed radio signals,;
second means for communicating (14) with the central unit (200) of the base station transceiver (300); and
means for processing (16) the signals of the mobile transceivers associated to the remote unit (100);
wherein
the second means for communicating (14) is adapted to receive information on a downlink multiplexing instruction and downlink signal components from the central unit (200);
the means for processing (16) the signals of the mobile transceivers is adapted to process the downlink signal components based on the information on the downlink multiplexing instruction to obtain a multiplexed downlink data signal; and
the first means for communicating (12) is adapted to communicate the multiplexed downlink data signal to the plurality of mobile transceivers associated to the remote unit (100),
wherein the downlink signal components correspond to dedicated user data and control information, and wherein the means for processing (16) is adapted to generate recurring downlink signal components for multiplexing the multiplexed downlink data signal.

2. The apparatus (10) of claim 1, wherein
the first means for communicating (12) is adapted to receive an uplink receive signal;
the second means for communicating (14) is adapted to receive information on an uplink demultiplexing instruction from the central unit (200);
the means for processing (16) the signals of the mobile transceivers is adapted to process the uplink receive signal based on the information on the uplink demultiplexing instruction to obtain demultiplexed uplink signal components; and
the second means (14) for communicating is adapted to communicate the demultiplexed uplink signal components to the central unit (200).

3. The apparatus (10) of claim 2, wherein the remote unit (100) and the central unit (200) are located at different geographical locations and wherein the means for processing (16) is adapted to process the uplink receive signal based on the information on the uplink demultiplexing instruction to obtain demultiplexed uplink signal components, wherein the uplink receive signal has a higher bandwidth than the sum of the bandwidths of the demultiplexed uplink signal components.

4. The apparatus (10) of claim 2, wherein the means for processing (16) is adapted to extract from the uplink receive signal uplink transmissions from a desired set of radio resources to obtain the demultiplexed uplink signal components, information on the desired set of radio resources being comprised in the information on the uplink demultiplexing instruction.

5. The apparatus (10) of claim 2, wherein the information on the uplink demultiplexing instruction and the information on the downlink multiplexing instruction comprises information on a signal form or how it is composed/decomposed based on signal parts, wherein the signal form corresponds to the uplink receive signal or the multiplexed downlink data signal, and wherein the signal parts correspond to the downlink signal components or the demultiplexed uplink signal components.

6. The apparatus (10) of claim 2, wherein the information on the uplink demultiplexing instruction or the information on the downlink multiplexing instruction comprises templates specifying coding information for encoding the uplink receive signal or for decoding the multiplexed downlink data signal, wherein the means for processing (16) is further adapted to store the template wherein the template is referenced by the information on the uplink demultiplexing instruction or the information on the downlink multiplexing instruction.

7. The apparatus (10) of claim 1, wherein the means for processing (16) is adapted to generate the recurring downlink signal components based on stored data signals, based on the information on the downlink multiplexing instruction, based on stored playback information or based on predefined playback information.

8. An apparatus (20) for a central unit (200) of a base station transceiver (300) in a mobile communication system, the base station transceiver (300) comprising the central unit (200) and a remote unit (100), the central unit apparatus (20) comprising
means for generating (22) information;
means for exchanging (24) information with the remote unit (100) of the base station transceiver (300),
wherein
the means for generating (22) is adapted for generating information on a downlink multiplexing instruction for the remote unit (100) of the base station transceiver (300); and
the means for exchanging (24) is adapted to transmit the information on the downlink multiplexing instruction and downlink signal components to the remote unit (100) of the base station transceiver (300),
wherein the means for generating (22) is adapted for generating information on the downlink multiplexing instruction for the remote unit (100) of the base station transceiver (300) and wherein the information on the downlink multiplexing instruction and the downlink signal components correspond to control information and dedicated user data, the control information comprising information on generation of recurring downlink signal components to be multiplexed with the downlink data.

9. The apparatus (20) of claim 8, wherein
the means for generating (22) information is adapted to generate information on an uplink demultiplexing instruction;
the means for exchanging (24) is adapted to transmit the information on the uplink demultiplexing instruction to the remote unit (100) and to receive demultiplexed uplink signal components from the remote unit (100).

10. The apparatus (20) of claim 9, wherein the information on the uplink demultiplexing instruction comprises information on a desired set of radio resources for which the demultiplexed data is received.

11. The apparatus (20) of claim 9, wherein the information on the uplink demultiplexing instruction or the information on the downlink multiplexing instruction comprises information on a signal form or how it is composed/decomposed based on signal parts, or wherein the signal form is specified by a template.

12. The apparatus (20) of claim 9, wherein the information on the uplink demultiplexing instruction or the information on the downlink multiplexing instruction comprises templates specifying coding information for encoding of an uplink receive signal or for decoding a multiplexed downlink data signal.

13. A method for a remote unit (100) of a base station transceiver (300) in a mobile communication system, the base station transceiver (300) comprising a central unit (200) and the remote unit (100), the method comprising at the remote unit (100)
communicating (32) with a plurality of mobile transceivers associated to the remote unit (100) using multiplexed radio signals;
communicating (34) with the central unit (200) of the base station transceiver (300);
processing (36) the signals of the mobile transceivers associated to the remote unit (100);
wherein
the communicating (34) comprises receiving information a downlink multiplexing instruction and downlink signal components from the central unit (200);
the processing (36) comprises processing the downlink signal components based on the information on the downlink multiplexing instruction to obtain a multiplexed downlink data signal, wherein the downlink signal components correspond to dedicated user data and control information, and further comprising generating recurring downlink signal components for multiplexing the multiplexed downlink data signal; and
communicating (38) the multiplexed downlink data signal to the plurality of mobile transceivers associated to the remote unit (100).

14. A method for a central unit (200) of a base station transceiver (300) in a mobile communication system, the base station transceiver (300) comprising the central unit (200) and a remote unit (100), the method comprising at the central unit (200)
generating (42) information on a downlink multiplexing instruction for the remote unit (200) of the base station transceiver (300);
exchanging (44) information with the remote unit (100) of the base station transceiver (300), comprising transmitting the information on the downlink multiplexing instruction and downlink signal components to the remote unit (100) of the base station transceiver (300), wherein the information on the downlink multiplexing instruction and the downlink signal components correspond to control information and dedicated user data, the control information comprising information on generation of recurring downlink signal components to be multiplexed with the downlink data.

15. A computer program having a program code for performing one of the methods of claims 13 or 14, when the computer program is executed on a computer or processor.

## Patentansprüche

1. Vorrichtung (10) für eine Ferneinheit (100) eines Basisstationstransceivers (300) in einem mobilen Kommunikationssystem, wobei der Basisstationstransceiver (300) eine Zentraleinheit (200) und die Ferneinheit (100) umfasst, wobei die Ferneinheitsvorrichtung (10) umfasst
erste Mittel für das Kommunizieren (12) mit einer Vielzahl von mobilen Transceivern, die mit der Ferneinheit (100) verbunden sind, unter Verwenden gemultiplexter Funksignale;
zweite Mittel für das Kommunizieren (14) mit der Zentraleinheit (200) des Basisstationsreceivers (300); und
Mittel zum Verarbeiten (16) der Signale der mobilen Transceiver, die mit der Ferneinheit (100) verbunden sind;
wobei
die zweiten Mittel für die Kommunikation (14) ausgelegt sind zum Empfangen von Information über eine Downlink-Multiplexing-Anweisung und über Downlink-Signalkomponenten von der Zentraleinheit (200);
die Mittel zum Verarbeiten (16) der Signale der mobilen Transceiver ausgelegt sind zum Verarbeiten der Downlink-Signalkomponenten auf Grundlage von Information über die Downlink-Multiplexing-Anweisung zum Erhalten eines gemultiplexten Downlink-Datensignals;
und die ersten Mittel für die Kommunikation (12) ausgelegt sind zum Übertragen des gemultiplexten Downlink-Datensignals auf die Vielzahl von mobilen Transceivern, die mit der Ferneinheit (100) verbunden sind,
die Downlink-Signalkomponenten dedizierten Benutzerdaten und Steuerinformation entsprechen, und wobei die Mittel zum Verarbeiten (16) ausgelegt sind zum Erzeugen von wiederkehrenden Downlink-Signalkomponenten für das Multiplexen des gemultiplexten Downlink-Datensignals.

2. Vorrichtung (10) nach Anspruch 1, wobei
die ersten Mittel für die Kommunikation (12) ausgelegt sind zum Empfangen eines Uplink-Empfangssignals;
die zweiten Mittel zum Kommunizieren (14) ausgelegt sind zum Empfangen von Information über eine Uplink-Demultiplexing-Anweisung von der Zentraleinheit (200);
die Mittel zum Verarbeiten (16) der Signale der mobilen Transceiver ausgelegt sind zum Verarbeiten des Uplink-Empfangssignals auf Grundlage von Information über die Uplink-Demultiplexing-Anweisung zum Erhalten von gedemultiplexten Uplink-Signalkomponenten; und
die zweiten Mittel (14) zum Kommunizieren ausgelegt sind zum Übertragen der gedemultiplexten Uplink-Signalkomponenten auf die Zentraleinheit (200).

3. Vorrichtung (10) nach Anspruch 2, wobei die Ferneinheit (100) und die Zentraleinheit (200) sich an unterschiedlichen geographischen Orten befinden und wobei die Mittel zum Verarbeiten (16) ausgelegt sind zum Verarbeiten des Uplink-Empfangssignals auf Grundlage der Information über die Uplink-Demultiplexing-Anweisung zum Erhalten gedemultiplexter Uplink-Signalkomponenten, wobei das Uplink-Empfangssignal eine größere Bandbreite aufweist als die Summe der Bandbreiten der gedemultiplexten Uplink-Signalkomponenten.

4. Vorrichtung (10) nach Anspruch 2, wobei die Mittel zum Verarbeiten (16) ausgelegt sind zum Extrahieren aus den Uplink-Empfangssignal-Uplink-Übertragungen aus einem gewünschten Satz von Funkressourcen zum Erhalten gedemultiplexer Uplink-Signalkomponenten, von Information über den gewünschten Satz von Funkressourcen, die umfasst sind in der Information über die Uplink-Demultiplexing-Anweisung.

5. Vorrichtung (10) nach Anspruch 2, wobei die Information über die Uplink-Demultiplexing-Anweisung und die Information über die Downlink-Multiplexing-Anweisung Information über eine Signalform umfasst oder darüber, wie es aufgebaut oder zerlegt wird auf Grundlage von Signalteilen, wobei die Signalform dem Uplink-Empfangssignal oder dem gemultiplexten Downlink-Datensignal entspricht und wobei die Signalteile den Downlink-Signalkomponenten der gedemultiplexten Uplink-Signalkomponenten entsprechen.

6. Vorrichtung (10) nach Anspruch 2, wobei die Information über die Uplink-Demultiplexing-Anweisung oder die Information über die Downlink-Multiplexing-Anweisung Vorlagen umfasst, welche Codierinformation spezifizieren zum Codieren des Uplink-Empfangssignals oder zum Decodieren des gemultiplexten Downlink-Datensignals, wobei die Mittel zum Verarbeiten (16) weiterhin ausgelegt sind zum Speichern der Vorlage, wobei die Vorlage referenziert ist durch die Information über die Uplink-Demultiplexing-Anweisung oder die Information über die Downlink-Multiplexing-Anweisung.

7. Vorrichtung (10) nach Anspruch 1, wobei die Mittel für die Verarbeitung (16) ausgelegt sind zum Erzeugen der wiederkehrenden Downlink-Signalkomponenten auf Grundlage der gespeicherten Datensignale, auf Grundlage von Information über die Downlink-Multiplexing-Anweisung, auf Grundlage gespeicherter Playback-Information oder auf Grundlage vordefinierter Playback-Information.

8. Vorrichtung (20) für eine Ferneinheit (200) eines Basisstationstransceivers (300) in einem mobilen Kommunikationssystem, wobei der Basisstationtransceiver (300) die Zentraleinheit (200) und eine Ferneinheit (100) umfasst, wobei die Zentraleinheitsvorrichtung (20) umfasst
Mittel für das Erzeugen (22) von Information;
Mittel zum Austauschen (24) von Information mit der Ferneinheit (100) des Basisstationstransceivers (300),
wobei
die Mittel zum Erzeugen (22) von Information ausgelegt sind zum Erzeugen von Information über eine Downlink-Multiplexing-Anweisung für die Ferneinheit (100) des Basisstationstransceivers (300); und
die Mittel zum Austauschen (24) ausgelegt sind zum Übertragen der Information über die Downlink-Multiplexing-Anweisung und die Downlink-Signalkomponenten auf die Ferneinheit (100) des Basisstationstransceivers (300),
wobei die Mittel zum Erzeugen (22) ausgelegt sind zum Erzeugen von Information über die Downlink-Multiplexing-Anweisung für die Ferneinheit (100) des Basisstationsreceivers (300) und wobei die Information über die Downlink-Multiplexing-Anweisung und die Downlink-Signalkomponenten Steuerinformation und dedizierten Benutzerdaten entspricht, wobei die Steuerinformation Information umfasst über das Erzeugen von wiederkehrenden Downlink-Signalkomponenten, die gemultiplext werden müssen mit den Downlink-Daten.

9. Vorrichtung (20) nach Anspruch 8, wobei
die Mittel für das Erzeugen (22) von Information ausgelegt sind zum Erzeugen von Information über eine Uplink-Demultiplexing-Anweisung;
die Mittel zum Austauschen (24) ausgelegt sind zum Übertragen der Information über die Uplink-Demultiplexing-Anweisung auf die Ferneinheit (100) und zum Empfangen gedemultiplexter Uplink-Signalkomponenten von der Ferneinheit (100).

10. Vorrichtung (20) nach Anspruch 9, wobei die Information über die Uplink-Demultiplexing-Anweisung Information umfasst über einen gewünschten Satz von Funkressourcen, für welche die gedemultiplexten Daten empfangen werden.

11. Vorrichtung (20) nach Anspruch 9, wobei die Information über die Uplink-Demultiplexing-Anweisung oder die Information über die Downlink-Multiplexing-Anweisung Information umfasst über die Signalform bzw. darüber, wie sie aufgebaut/zerlegt wird auf Grundlage von Signalteilen oder wobei die Signalform spezifiziert wird durch eine Vorlage.

12. Vorrichtung (20) nach Anspruch 9, wobei die Information über die Uplink-Demultiplexing-Anweisung oder die Information über die Downlink-Multiplexing-Anweisung Vorlagen umfasst, welche Codierinformation spezifizieren für die Codierung eines Uplink-Empfangssignals oder zum Decodieren eines gemultiplexten Downlink-Datensignals.

13. Verfahren für eine Ferneinheit (100) eines Basisstationstransceivers (300) in einem mobilen Kommunikationssystem, wobei der Basisstationtransceiver (300) eine Zentraleinheit (200) und die Ferneinheit (100) umfasst, wobei das Verfahren an der Ferneinheit (100) umfasst
das Kommunizieren (32) mit einer Vielzahl von mobilen Transceivern, die mit der Ferneinheit (100) verbunden sind, unter Verwenden gemultiplexter Radiosignale; das Kommunizieren (34) mit der Zentraleinheit (200) des Basisstationsreceivers (300);
das Verarbeiten (36) der Signale der mobilen Transceiver, die mit der Ferneinheit (100) verbunden sind;
wobei
das Kommunizieren (34) umfasst das Empfangen von Information einer Downlink-Multiplexing-Anweisung und Downlink-Signalkomponenten von der Zentraleinheit (200);
das Verarbeiten (36) umfasst das Verarbeiten der Downlink-Signalkomponenten auf Grundlage von Information über die Downlink-Multiplexing-Anweisung zum Erhalten eines gemultiplexten Downlink-Datensignals, wobei die Downlink-Signalkomponenten dedizierten Benutzerdaten und Steuerinformation entsprechen, und weiterhin umfassend das Erzeugen von wiederkehrenden Downlink-Signalkomponenten für das Multiplexing des gemultiplexten Downlink-Datensignals; und
Übertragen (38) des gemultiplexten Downlink-Datensignals auf die Vielzahl von mobilen Transceivern, die mit der Ferneinheit (100) verbunden sind.

14. Verfahren für eine Zentraleinheit (200) eines Basisstationstransceivers (300) in einem mobilen Kommunikationssystem, wobei der Basisstationtransceiver (300) umfasst die Zentraleinheit (200) und eine Ferneinheit (100), wobei das Verfahren an der Zentraleinheit (200) umfasst
das Erzeugen (42) von Information über eine Downlink-Multiplexing-Anweisung für die Ferneinheit (200) des Basisstationstransceivers (300);
das Austauschen (44) von Information mit der Ferneinheit (100) des Basisstationstransceivers (300), umfassend das Übertragen der Information über die Downlink-Multiplexing-Anweisung und die Downlink-Signalkomponente auf die Ferneinheit (100) des Basisstationstransceivers (300), wobei die Information über die Downlink-Multiplexing-Anweisung und die Downlink-Signalkomponenten Steuerinformation und dedizierten Benutzerdaten entspricht, wobei die Steuerinformation Information über das Erzeugen von wiederkehrenden Downlink-Signalkomponenten umfasst, die mit den Downlink-Daten gemultiplext werden müssen.

15. Ein Computerprogramm, das einen Programmcode aufweist für die Durchführung eines der Verfahrens nach den Ansprüchen 13 oder 14, wenn das Computerprogramm auf einem Computer oder Prozessor ausgeführt wird.

## Revendications

1. Appareil (10) pour une unité distante (100) d'un émetteur-récepteur de station de base (300) dans un système de communication mobile, l'émetteur-récepteur de station de base (300) comprenant une unité centrale (200) et l'unité distante (100), l'appareil d'unité distante (10) comprenant
des premiers moyens de communication (12) avec une pluralité d'émetteurs-récepteurs mobiles associés à l'unité distante (100) en utilisant des signaux radio multiplexés,
des deuxièmes moyens de communication (14) avec l'unité centrale (200) de l'émetteur-récepteur de station de base (300) ; et
des moyens de traitement (16) des signaux des émetteurs-récepteurs mobiles associés à l'unité distante (100) ;
dans lequel
les deuxièmes moyens de communication (14) sont adaptés pour recevoir des informations sur une instruction de multiplexage de liaison descendante et des éléments de signal de liaison descendante à partir de l'unité centrale (200) ; les moyens de traitement (16) des signaux des émetteurs-récepteurs mobiles sont adaptés pour traiter les éléments de signal de liaison descendante sur la base des informations sur l'instruction de multiplexage de liaison descendante pour obtenir un signal de données de liaison descendante multiplexé ; et
les premiers moyens de communication (12) sont adaptés pour communiquer le signal de données de liaison descendante multiplexé à la pluralité d'émetteurs-récepteurs mobiles associés à l'unité distante (100),
dans lequel les éléments de signal de liaison descendante correspondent à des données d'utilisateur dédiées et à des informations de commande, et dans lequel les moyens de traitement (16) sont adaptés pour générer des éléments de signal de liaison descendante récurrents pour multiplexer le signal de données de liaison descendante multiplexé.

2. Appareil (10) selon la revendication 1, dans lequel
les premiers moyens de communication (12) sont adaptés pour recevoir un signal de réception de liaison montante ;
les deuxièmes moyens de communication (14) sont adaptés pour recevoir des informations sur une instruction de démultiplexage de liaison montante à partir de l'unité centrale (200) ;
les moyens de traitement (16) des signaux des émetteurs-récepteurs mobiles sont adaptés pour traiter le signal de réception de liaison montante sur la base des informations sur l'instruction de démultiplexage de liaison montante pour obtenir des éléments de signal de liaison montante démultiplexés ; et
les deuxièmes moyens (14) de communication sont adaptés pour communiquer les éléments de signal de liaison montante démultiplexés à l'unité centrale (200).

3. Appareil (10) selon la revendication 2, dans lequel l'unité distante (100) et l'unité centrale (200) sont situées à différents emplacements géographiques et dans lequel les moyens de traitement (16) sont adaptés pour traiter le signal de réception de liaison montante sur la base des informations sur l'instruction de démultiplexage de liaison montante pour obtenir des éléments de signal de liaison montante démultiplexés, dans lequel le signal de réception de liaison montante a une largeur de bande supérieure à la somme des largeurs de bande des éléments de signal de liaison montante démultiplexés.

4. Appareil (10) selon la revendication 2, dans lequel les moyens de traitement (16) sont adaptés pour extraire du signal de réception de liaison montante des transmissions de liaison montante provenant d'un ensemble souhaité de ressources radio pour obtenir les éléments de signal de liaison montante démultiplexés, les informations sur l'ensemble souhaité de ressources radio étant comprises dans les informations sur l'instruction de démultiplexage de liaison montante.

5. Appareil (10) selon la revendication 2, dans lequel les informations sur l'instruction de démultiplexage de liaison montante et les informations sur l'instruction de multiplexage de liaison descendante comprennent des informations sur une forme de signal ou sur la manière dont elle est composée/décomposée sur les bases de parties de signal, dans lequel la forme de signal correspond au signal de réception de liaison montante ou au signal de données de liaison descendante multiplexé, et dans lequel les parties de signal correspondent aux éléments de signal de liaison descendante ou aux éléments de signal de liaison montante démultiplexés.

6. Appareil (10) selon la revendication 2, dans lequel les informations sur l'instruction de démultiplexage de liaison montante ou les informations sur l'instruction de multiplexage de liaison descendante comprennent des modèles spécifiant des informations de codage pour coder le signal de réception de liaison montante ou pour décoder le signal de données de liaison descendante multiplexé, dans lequel les moyens de traitement (16) sont en outre adaptés pour stocker le modèle, le modèle étant référencé par les informations sur l'instruction de démultiplexage de liaison montante ou les informations sur l'instruction de multiplexage de liaison descendante.

7. Appareil (10) selon la revendication 1, dans lequel les moyens de traitement (16) sont adaptés pour générer les éléments de signal de liaison descendante récurrents sur la base de signaux de données stockés, sur la base des informations sur l'instruction de multiplexage de liaison descendante, sur la base d'informations de lecture stockées ou sur la base d'informations de lecture prédéfinies.

8. Appareil (20) pour une unité centrale (200) d'un émetteur-récepteur de station de base (300) dans un système de communication mobile, l'émetteur-récepteur de station de base (300) comprenant l'unité centrale (200) et une unité distante (100), l'appareil d'unité centrale (20) comprenant
des moyens de gestion (22) des informations ;
des moyens d'échange (24) d'informations avec l'unité distante (100) de l'émetteur-récepteur de station de base (300),
dans lequel
les moyens de gestion (22) sont adaptés pour générer des informations sur une instruction de multiplexage de liaison descendante pour l'unité distante (100) de l'émetteur-récepteur de station de base (300) ; et
les moyens d'échange (24) sont adaptés pour transmettre les informations sur l'instruction de multiplexage de liaison descendante et les éléments de signal de liaison descendante à l'unité distante (100) de l'émetteur-récepteur de station de base (300),
dans lequel les moyens de gestion (22) sont adaptés pour générer des informations sur l'instruction de multiplexage de liaison descendante pour l'unité distante (100) de l'émetteur-récepteur de station de base (300) et dans lequel les informations sur l'instruction de multiplexage de liaison descendante et les éléments de signal de liaison descendante correspondent à des informations de commande et à des données d'utilisateur dédiées, les informations de commande comprenant des informations sur la génération d'éléments de signal de liaison descendante récurrents devant être multiplexés avec les données de liaison descendante.

9. Appareil (20) selon la revendication 8, dans lequel
les moyens de gestion (22) d'informations sont adaptés pour générer des informations sur une instruction de démultiplexage de liaison montante ;
les moyens d'échange (24) sont adaptés pour transmettre les informations sur l'instruction de démultiplexage de liaison montante à l'unité distante (100) et pour recevoir des éléments de signal de liaison montante démultiplexés à partir de l'unité distante (100).

10. Appareil (20) selon la revendication 9, dans lequel les informations sur l'instruction de démultiplexage de liaison montante comprennent des informations sur un ensemble souhaité de ressources radio pour lesquelles les données démultiplexées sont reçues.

11. Appareil (20) selon la revendication 9, dans lequel les informations sur l'instruction de démultiplexage de liaison montante ou les informations sur l'instruction de multiplexage de liaison descendante comprennent des informations sur une forme de signal ou sur la manière dont elle est composée/décomposée sur la base de parties de signal, ou dans lequel la forme de signal est spécifiée par un modèle.

12. Appareil (20) selon la revendication 9, dans lequel les informations sur l'instruction de démultiplexage de liaison montante ou les informations sur l'instruction de multiplexage de liaison descendante comprennent des modèles spécifiant des informations de codage pour coder un signal de réception de liaison montante ou pour décoder un signal de données de liaison descendante multiplexé.

13. Procédé pour une unité distante (100) d'un émetteur-récepteur de station de base (300) dans un système de communication mobile, l'émetteur-récepteur de station de base (300) comprenant une unité centrale (200) et l'unité distante (100), le procédé comprenant au niveau de l'unité distante (100)
la communication (32) avec une pluralité d'émetteurs-récepteurs mobiles associés à l'unité distante (100) en utilisant des signaux radio multiplexés ;
la communication (34) avec l'unité centrale (200) de l'émetteur-récepteur de station de base (300) ;
le traitement (36) des signaux des émetteurs-récepteurs mobiles associés à l'unité distante (100) ;
dans lequel
la communication (34) comprend la réception d'informations sur une instruction de multiplexage de liaison descendante et des éléments de signal de liaison descendante à partir de l'unité centrale (200) ;
le traitement (36) comprend le traitement des éléments de signal de liaison descendante sur la base des informations sur l'instruction de multiplexage de liaison descendante pour obtenir un signal de données de liaison descendante multiplexé, dans lequel les éléments de signal de liaison descendante correspondent à des données d'utilisateur dédiées et à des informations de commande, et comprenant en outre la génération d'éléments de signal de liaison descendante récurrents pour multiplexer le signal de données de liaison descendante multiplexé ; et
communiquer (38) le signal de données de liaison descendante multiplexé à la pluralité d'émetteurs-récepteurs mobiles associés à l'unité distante (100).

14. Procédé pour une unité centrale (200) d'un émetteur-récepteur de station de base (300) dans un système de communication mobile, l'émetteur-récepteur de station de base (300) comprenant l'unité centrale (200) et une unité distante (100), le procédé comprenant au niveau de l'unité centrale (200)
la génération (42) des informations sur une instruction de multiplexage de liaison descendante pour l'unité distante (200) de l'émetteur-récepteur de station de base (300) ;
l'échange (44) d'informations avec l'unité distante (100) de l'émetteur-récepteur de station de base (300), comprenant la transmission des informations sur l'instruction de multiplexage de liaison descendante et des éléments de signal de liaison descendante à l'unité distante (100) de l'émetteur-récepteur de station de base (300), dans lequel les informations sur l'instruction de multiplexage de liaison descendante et les éléments de signal de liaison descendante correspondent à des informations de commande et à des données d'utilisateur dédiées, les informations de commande comprenant des informations sur la génération d'éléments de signal de liaison descendante récurrents devant être multiplexés avec les données de liaison descendante.

15. Programme informatique possédant un code de programme pour exécuter un des procédés selon la revendication 13 ou 14, lorsque le programme informatique est exécuté sur un ordinateur ou un processeur.
